# EUROPEAN PATENT APPLICATION

(11) **EP 2 789 676 A1**
(43) Date of publication of application: **15.10.2014**
(21) Application number: 11876113.9
(22) Date of filing: 23.11.2011
(51) Int. Cl.: C10L 1/16, C10L 1/182, C10L 1/188

(54) **HYDROCARBON FUEL ANTIOXIDANT AND USE METHOD THEREFOR**

(71) Applicant: Xiong, Liang, Guangdong 518053 (CN)
(72) Inventor: ZHU, Heguang, Mississauga, Ontario L5MOH3 (CA)
(74) Representative: Decamps, Alain René François
(86) International application number: PCT/CN2011/082707
(87) International publication number: WO 2013/075296

(57) **Abstract**

A hydrocarbon fuel antioxidant comprises a compound having a following molecular structure Rl-(CnHm)-R2, a precursor or a derivative of the compound: wherein n and m are positive integers; -(CnHm)- group is a straight chain molecule segment formed by covalent linkage of carbon atoms which are more than or equal to 3 and less than or equal to 50; ,R1 and R2 comprise an aromatic ring or carboxylic acid or hydroxyl radical or alkyl group; the aromatic ring group may either be a single ring or polycyclic, and may also be a heterocycle containing oxygen or nitrogen, which may be provided with or not provided with a substituent group; the antioxidant contains more than one linear chain or ring conjugated bond formed by conjugated double bonds; the ring conjugated double bonds are located on the aromatic ring at the end part; the linear chain conjugated double bonds are located on a carbon chain in the middle; and the antioxidant has a prominent absorption peak in a 250-400 nm ultraviolet wavelength range. The hydrocarbon fuel antioxidant comprises carotinoid, vitamin A or vitamin E. The invention further provides applications and a method of application of the antioxidant. The antioxidant can promote the ultraviolet light stabilization effect of the fuels, but also can promote the oxygen stabilization effect of the fuels, and particularly can promote the combustion efficiency of the fuels and reduce the emission of contaminants when the antioxidant is together used with such additives as cetane number improver and octane number improver.

## Description

### Field of the Invention

The present invention relates to a hydrocarbon fuel antioxidant as well as a method of adding and applying the hydrocarbon fuel antioxidant. The antioxidant can be applied to gasoline, diesel oil, fuel oil, biomass oil, lubricating oil and aeroengine oil, can promote the light stability and oxygen stability of the fuels, and play the role of promoting the combustion efficiency of the fuels and reduce emission of tail gases.

### Background of the Invention

It is well known that hydrocarbon fuels such as gasoline, diesel oil, fuel oil, lubricating oil, biodiesel and the like are easily oxidized by the oxygen and ultra violet in the air during processes of production, transportation and storage. The oxygen in the air may be dissolved in the fuels through surface contact and mixing. Under a proper physical or chemical condition, an oxidation reaction may occur; oxygen may react with surrounding reducing substances. Accompanied with the oxidation reaction, free radicals may be generated. However, the free radicals may also cause a new oxidation reaction, thus starting a certain chain reaction. A lot of saturated and unsaturated hydrocarbon substances exist in the hydrocarbon fuels. The chain reaction caused by the oxidation reaction may cause a polymerization reaction to the saturated and unsaturated hydrocarbon substances so as to form polyester (resinous) compounds. The properties of the polyester compounds formed are similar to paint and pitch. Accumulation of the polyester (gum) having toughness may cause the fuels in an internal combustion engine to be caked by utilizing a system valve and plug pipelines and a filter so as to affect the normal work of the internal combustion engine. The oxidation effect may further make the color of the fuel materials become darker and cause a phenomenon like turbidness, thus affecting the appearance and the use function. In addition, other various types of additives such as anticoagulant, lubricant, conductivity additive, ignition improver, octane number improver , cetane number improver, antioxidant and the like added in the fuels may also lose activity due to the oxidation effect.

The ultra violet (UV) exists in natural light and may cause decomposition of multiple organic compounds. The decomposition effect of the ultra violet may also cause oxidation effect (called as photooxidation effect) at the same time, which is because that the decomposition effect of the ultra violet is also accompanied with the generation of free radicals. However the generation of the free radicals causes a chain oxidation reaction, so that the irradiated materials are deteriorated and denatured.

The impacts of different hydrocarbon fuels suffered from oxidation effect including the photooxidation effect may be different. A US Pat No. 7,964,002 B2 discloses that hydrogenated pyrolysis gasoline and catalytically cracked gasoline are easily affected by oxidation and sediments thereof when being compared with other hydrocarbon fuels.

Apart the hydrocarbon fuels which are easily oxidized, other similar industrial products that are easily oxidized as well further include plastic and rubber (causing aging), fat (causing decomposition and acidification), transmission and turbine oil (producing sewage sludge deposits), essences and spices (causing flavour reversion) and cosmetics (causing color change) and the like.

Due to the existence of the oxidation effect, antioxidants are usually added in the processes of production, transportation and storage of the hydrocarbon fuels so as to prevent negative influences caused to the fuels due to the oxidation effect. Known antioxidants include natural antioxidants and synthetic antioxidants, which comprise some phenol (such as hindered phenol, catechol, hydroquinone and the like), some aromatic compounds excluding phenol and some amine compounds. The phenol antioxidants which have been widely used include hindered phenols such as 2,6-di-tert-butylisophenol and derivatives thereof, 3,5-di-tert-butyl-4-hydroxybenzyl, 3,5-di-tert-butyl-4-hydroxybenzyl alcohol, methyl-3-(3,5-di-tert-butyl-4-hydroxylphenyl)-propionate), 2,6-di-tert-butyl paracresol, and 2,4-dimethyl-6-tert-butyl phenol. The aromatic compound antioxidants include butylated hydroxyl toluene (which is an analog of Vitamine E), and phenothiazines, and the like. The amine antioxidants include phenylenediamine (PDA), diphenylamine, dinaphthylamines, phenylnaphthylamines, imino bisbenzyl, and the like, which may either include or not include substituent groups. US patent (US Pat No 7,964,002 B2) discloses an antioxidant used for such hydrocarbon fuels as biodiesel and the like, which is formed by mixing at least one aromatic diamine and at least one sterically hindered phenol.

US patents (US Pat No 3,026,264, 3,211,652, 3,297,575) disclose some phenol antioxidants, the molecular structures of which have a methylene bridge (methylene bridges) in the middle. US patent (US Pat No 4,222,884) discloses a segment formed by 1 to 10 methylene bridged hydrocarbyl phenol units in the middle, wherein 3,5-dihydrocarbyl-4-hydroxy-benzyl groups in the middle.

Multiple highly-effective antioxidant molecules have been found while studying the oxidation and antioxidant effects of biological cells, which include water-soluble ascorbic acid (vitamin C), glutathione, lipoid acid, uric acid, oligomeric proanthocyanidins and oil-soluble carotenoids (β-carotene) and retinol (vitamin A), tocopherol (vitamin E), ubiquinol (quinoline Q), chlorophyll, organic sulphur compounds (organic sulphur compounds) and the like. An extremely low concentration (number mg/L) of the antioxidants usually have better antioxidant effects in vivo. However, multiple antioxidants therein are not stable in vitro, and are easily oxidized under the existence of light and oxygen so as to lose activity. No patent literatures involve in a method of using the compounds as antioxidants in the hydrocarbon fuel are not mentioned yet. US patents (US2005/0160662A1, US5,826,369, US2010/0223841) disclose a method of using such compounds as carotenes (carotenes) and chlorophyll (chlorophyll) and the like that are provided with conjugated double bond to improve the combustion efficiency of the hydrocarbon fuels, reduce gas emission, as well as improve the cetane number of the diesel oil and the combustion smoke point. However, the patents neither mention the action mechanism for promoting combustion thereof, nor relate to the antioxidant effect of the compounds.

The antioxidant action mechanism of the antioxidants is mostly to quench the free radicals through the self oxidation of the antioxidants, i.e. unmatched free electrons are absorbed from the free radicals, so that the free radicals are eliminated and the oxidation effect of the oxidizing agent is neutralized. Some antioxidants such as 2,6-di-tert-butylisophenol and 2,4-dimethyl-6-tert-butylphenol cannot absorb ultra violet, but are free from the photooxidation effect of the ultra violet, and can still exert the antioxidant effect under the ultra violet. Therefore, the antioxidants are used as light stabilizers for such industrial products as plastic rubber products, skin care products and the like. However, because the antioxidants cannot absorb ultra violet independently, the effects of defending ultra violet thereof are passive and slow. The traditional antioxidants generally do not possess the ability of resisting ultra violet oxidation, so that the antioxidant effects thereof are severely affected. US patent (US Pat No 7,906,684 B2) discloses a ultraviolet absorber used for ultra violet prevention skin care product, which is bridged (forming space division) to an organic compound formed by two aromatic ring groups through methylene, methylene substituted by hydroxyl radical or ketone group, or a segment connected by several such methylenes.

To sum up, the existing hydrocarbon fuel antioxidants lack the ability of absorbing the ultra violet and effectively resisting and inhibiting the photooxidation. More effective antioxidants, which can absorb and resist the oxidation of the ultra violet, and can promote the combustion efficiency of the hydrocarbon fuels and reduce emission of contaminants at the same time, are needed in actual production.

### Summary of the invention

The present invention aims at the foregoing defects of the current hydrocarbon fuel antioxidants to provide a novel antioxidant used for hydrocarbon fuels. The antioxidant has excellent abilities to absorb and resist ultra violet, and has the advantages of being capable of inhibiting the oxygen oxidation from the air, promoting the combustion efficiency of the fuels, and reducing the emission of contaminants and the like. The present invention further comprises a method of application of the novel antioxidant.

One objective of the present invention is to provide a hydrocarbon fuel antioxidant, which is realized through the following technical solution.

The hydrocarbon fuel antioxidant according to the present invention comprises a compound having a molecular structure as follows, as well as a precursor or a derivative of the compound, wherein the molecular structure is as follows: Rl-(CnHm)-R2, wherein n and m are positive integers; (CnHm) group is a straight chain molecule segment formed by covalent linkage of carbon atoms which are more than or equal to 3 and less than or equal to 50; R1 and R2 comprise an aromatic ring or carboxylic acid or hydroxyl radical or alkyl group. The aromatic ring group may either be a single ring or polycyclic, and may also be a heterocycle containing oxygen or nitrogen, which may be provided or not with a substituent group. The antioxidant contains more than one linear chain or ring conjugated bond formed by conjugated double bonds. The ring conjugated double bonds are located on the aromatic ring at the end part. The linear chain conjugated double bonds are located on a carbon chain in the middle. The antioxidant has a prominent absorption peak in a 250-400 nm ultraviolet wavelength range. Further, in the (CnHm) group of the hydrocarbon fuel antioxidant, the homopolar bond connected to the carbon atoms comprises saturated bond, unsaturated bonds or mixture of the saturated bonds and the unsaturated bonds. Besides C-C or C=C bonds, free electrons surrounding the carbon atoms are saturated by hydrogen atoms, and some hydrogen atoms may be substituted by methyl, hydroxyl radical or carbonyl groups.

Further, the hydrocarbon fuel antioxidant comprises carotinoid, vitamin A or vitamin E. Still further, a typical compound of this type comprises: carotenoid represented by phytoene or phytofluene; vitamin A represented by retinol, retinyl palmitate or retinyl stearate; and vitamin E represented by α-, β-, and γ- tocopherols.

The foregoing compound may be natural products extracted from plants, alga or other biological materials which include purer essence extracts or crude extracts not having high purity, and may also be synthetic materials, which are usually dissolved in such organic solvents as ethanol, isooctane, chloroform and the like.

The present invention further provides an application of the hydrocarbon fuel antioxidant as a hydrocarbon fuel additive.

The present invention further provides a method of application of the foregoing hydrocarbon fuel antioxidant. The hydrocarbon fuel antioxidant may be added in the hydrocarbon fuels in a concentration of 0.2-50 mg (antioxidant)/kg (hydrocarbon fuel). A more preferable concentration range is 0.8-10 mg/kg, and the most preferable range is 1-5mg/kg.

Further, the hydrocarbon fuel antioxidant may either be singly used or be mixedly used in any combination manner and ratio. However, a mixture formed by compounds having different ultra violet absorption peaks, such as a mixture formed by two compounds having different ultra violet absorption peaks, is preferred. For example, a mixture formed by a component (having absorption peak near 290 nm) selected from phytoene and vitamin E, and a component (having absorption peak near 325 nm) selected from phytofluene and vitamin A is preferred. For example, a mixing ratio of the mixture formed by phytofluene and phytoene is 10:1 to 1:10.

Another objective of the present invention is to provide a method of application of the foregoing hydrocarbon fuel antioxidant. The antioxidant may be together used with any other antioxidant or heat stabilizer.

The antioxidants that can be together used, comprise but are not limited to phenol antioxidants, amine antioxidants, aromatic compound antioxidants or various antioxidants derived from biosomes but not having apparent ultraviolet absorption effects.

The phenol antioxidants comprise hindered phenol 2,6-di-tert-butylphenol, 4-methyl-2,6-di-tert-butylphenol, 2,4-dimethyl-6-tert-butylphenol, methylene bridged polyalkylphenols such as 4,4'-methylenebis (2,6-di-tert-butylphenol), diphenol and the like.

The amine antioxidants comprise n,n'-diphenylphenylenediamine, p-octyldiphenylamine, p,p-dioctyldiphenylamine, n-(p-dodecyl) phenyl-2-naphthylamine, di-1-naphthylamine, di-2-naphthylamine, iminodibenzyl, cycloalkyl-di-lower alkyl amines, phenylenediamines, n, n'-di-lower-alkyl phenylenediamines such as n, n'-di-sec-butyl-p-phenylenediamine and the like.

Other aromatic compound antioxidant comprises phenothiazine, quinolines, methylene segment formed by methylenes or polymethylenes, methylene or polymethylene segment substituted by hydroxyl radical or ketone group, or oxygen atom bridged double aromatic ring compound. The quinoline, hindered phenol and some diamine antioxidants are preferred.

The antioxidant derived from biosome but not having apparent ultraviolet absorption effect comprises fat-soluble carotinoids, β-carotene, retinol (also called as vitamin A), tocopherol (vitamin E), ubiquinol (also called as quinoline Q), chlorophyll, organic sulphur compounds, water-soluble ascorbic acid, glutathione, lipoid acid, uric acid, oligomeric proanthocyanidins and the like.

When the antioxidant of the present invention is mixedly used with the existing antioxidants, a mixing and adding ratio is 1:10 to 10:1, wherein a range of 2:1 to 1:2 is preferred.

As another choice, the antioxidant according to the present invention may (not required) also be used with various other combustion improvers such as cetane number improver and smoke point improver. The combustion improvers that can be used together further comprise 2-ethylhexyl nitrate (which is also called as isooctyl nitrate). The mixing ratio of the antioxidant and the combustion improver is not defined specifically, and the antioxidant and the combustion improver are added with reference to the optimal volume of addition thereof respectively.

The hydrocarbon fuel antioxidant according to the present invention can be selectively added with one or a mixture of several of detergent, antidetonant, pour point depressant, antirust agent, bactericide or conductivity additive. The use of the antioxidant may not affect the use functions of the additives. On the contrary, the addition of the antioxidant may increase the stability of the additives. The mixing ratio is not defined specifically and is depended on the optimal amount of addition respectively.

The antioxidant according to the present invention may effectively reduce the photooxidation effect of ultra violet on the hydrocarbon fuels and various additives thereof, and has better antioxidant effect without ultra violet irradiation. Therefore, the action range of the antioxidant can be greatly increased, so that the antioxidant not only can promote the light stabilization effect of the fuels, but also can promote the oxygen stabilization effect of the fuels. The antioxidant further has the effects of promoting the combustion efficiency of the fuels and reducing the emission of contaminants when being together used with other cetane number improver, octane number improver and the like.

### Short Description of Drawings

FIG. 1 is ultraviolet absorption spectrums of phytoene; and
FIG. 2 is ultraviolet absorption spectrums of phytofluene.

### Detailed Description of the preferred embodiments

The antioxidant according to the present invention is further described with reference to the specific embodiments hereinafter, for the public to better understand the technical solution according to the present invention, rather than for the purpose of limiting the technical contents. Derivatives obtained by performing modification and addition on the antioxidant having the foregoing molecular structure as well as improvement made on the method of application of the antioxidant based on the principles and laws familiar to those skilled in the art to realize the basically same technical effects shall all fall within the technical solution of which the present invention requires protection.

### Embodiment 1

The present invention relates to a ultra violet antioxidant which typically includes phytoene, phytofluene, retinol, retinyl palmitate, retinyl stearate, α-, β- and γ- -tocopherols, wherein the UV absorption of the antioxidant in such organic solvent as ethanol, chloroform and iso-octane is shown in the table below:

| *Compound* | *Maximum ultra violet absorption peak (nm)* |
|---|---|
| Phytoene (phytoene) | 288 |
| Phytofluene (phytofluene) | 330, 348,367 |
| Retinol (retinol) | 325 |
| Retinyl palmitate (retinyl palmitate) | 325 |
| Retinyl stearate (retinyl stearate) | 325 |
| α-tocopherol (α-tocopherol) | 290 |
| β-tocopherol(β-tocopherol) | 290 |
| γ-tocopherol (γ-tocopherol) | 290 |

It can be known from the above-mentioned table that the foregoing compound has very strong absorption peaks near 290 nm and 325 nm, wherein the phytofluene also has absorption peaks near 348 nm and 267 nm.

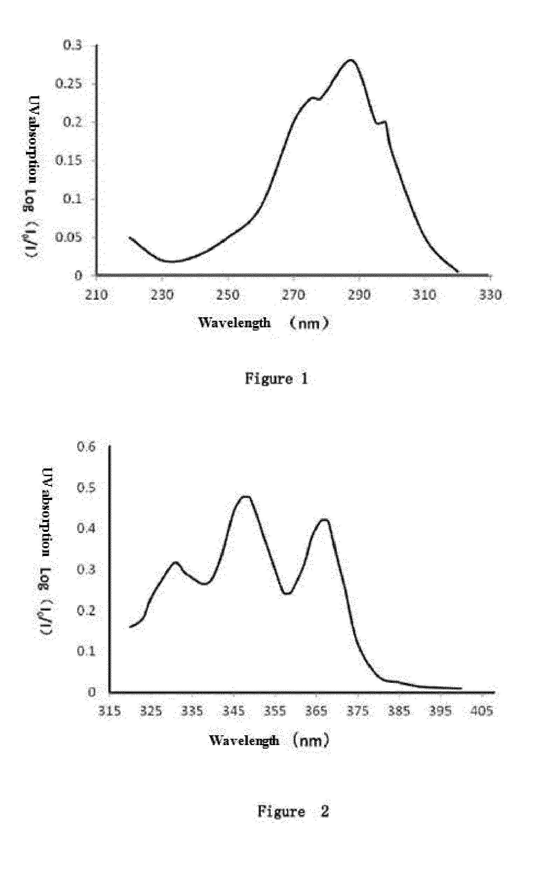

FIG. 1 and FIG. 2 show the absorption spectrums of the phytoene and the phytofluene. It can be seen that a mixture of the two substances may absorb ultra violet in a very big wavelength range.

The ultra violet may be divided into UVA (315-400 nm), UVB (280-315 nm) and UVC (150-280 nm). Because 98.7% of the ultra violet arriving at the surface of the earth is UVA, and most of the rest part is UVB, the foregoing compound can effectively absorb the ultra violet in the sunshine apparently. Particularly, most ultra violet in the sunshine can be absorbed by mixedly using the UV antioxidant having the absorption peak near 290 nm and the UV antioxidant having the absorption peak near 325-367 nm, thus eliminating and inhibiting the hazards caused by the ultra violet. When the combination of the phytoene and the phytofluene is used, an effectively absorbed ultra violet wavelength range is 260-375 nm.

### Embodiment 2

The antioxidant effect of the antioxidant may be determined by using a DPPH (2,2-diphenyl-1-picrylhydrazyl) test. The DPPH is a free radical that is relatively stable in a liquid. An absorption band having a peak value at 515 nm may be caused by the unmatched electrons in the DPPH, and the liquid is dark purple. When the antioxidant (namely a free radical scavenger) exists, the unmatched electrons are matched, and then the absorption peak at 515 nm may disappear accordingly, and the color may also be faded with the addition of the antioxidant. The color change reflects the number of the absorbed free electrons. The capacity of the antioxidant for eliminating the free radicals is represented by a half eliminating concentration (recorded as EC50, unit g/kg DPPH) firstly, which namely enables 50% of the DPPH to react so as to generate the required concentration of the antioxidant. The lower is the EC50 value of the antioxidant, the stronger will be the capacity thereof for eliminating the free radicals, i.e. the antioxidant capacity.

The antioxidant capacity is also related to the time (TEC50, min) for achieving the semi-eliminating concentration, wherein the time reflects the antioxidant reaction speed. When the time is smaller than 5 min, the antioxidant reaction speed is considered very fast; if the time is greater than 30 min, then the antioxidant reaction speed is considered slower.

The antioxidation efficiency (AE) of the antioxidant can be calculated by using the following expression: AE= 1/(EC50*TEC50), wherein lower AE is smaller than 1*10⁻⁴, intermediate AE is between 1-2*10⁻⁴ and larger AE value is greater than 20*10⁻⁴.

The EC50, TEC50 and AE of the antioxidant like tocopherol (vitamin E) according to the present invention are respectively 201 g/kg DPPH, 9.05 min and 0.52*10⁻³.

### Embodiment 3

A smoke point is measured in a smoke point instrument, which is an index for reflecting the combustion performance of the fuels. The operating principle of the smoke point instrument is similar to that of an old kerosene lamp. When the height of a lamp wick is fixed, the height of a flame and the dark smoke of the flame depend on the quality of the kerosene and the oxygen entering a combustion zone near the lamp wick. When the oxygen is insufficient, dark smoke may be generated at the top of the frame and the flame is unstable. For a stationary fuel, the air volume can be adjusted till the dark smoke just disappears. The flame at this moment is stable and the height of the flame is constant. The height of the flame measured at this moment is called as the smoke point. The combustion performance of different fuels may be compared by comparing the smoke points thereof. The lower is the smoke point, the better will be the combustion performance.

The following table shows the smoke point of aviation kerosene in which β-carotene and lycopene are added. In order to better display the influences of the β-carotene and the lycopene on the smoke point of the kerosene, 25% dimethylbenzene is added in the aviation kerosene in advance.

A preparation method of the β-carotene additive concentrate is as follows: taking 0.3 g of commercialized β-carotene (30%), slowly adding the β-carotene into 99.7 g of certain aviation kerosene, and then adding 0.05 g of ethoxy quinoline, and mixing uniformly. A preparation method of the mixed concentrate of phytoene and phytofluene is as follows: a mixed sample of the phytoene and the phytofluene contains 1mg/mL of the phytoene and the phytofluene, wherein taking 0.3g of such a sample and slowly adding the sample into 99.7 g of certain aviation kerosene, and mixing uniformly.

It can be seen from the table that after the phytoene/phytofluene is added, the smoke point of the aviation kerosene is 25 mm, which is improved by 2 mm than the smoke point of the aviation kerosene not added with the lycopene. The smoke point of the aviation kerosene added with the β-carotene does not have obvious change when being compared with the smoke point free of additives.

| Sample | Smoke point (mm) |
|---|---|
| Aviation kerosene (containing 25% dimethylbenzene) | 23 |
| 200 g aviation kerosene (containing 25% dimethylbenzene) + 1.2g β-carotene additive concentrate | 23 |
| 200 g aviation kerosene (containing 25% dimethylbenzene) + 1.2g mixed concentrate of phytoene and phytofluene | 25 |

### Embodiment 4

An automated ignition quality tester (IQTTM) of Advanced Engine Technology Ltd may be utilized to quickly and exactly measure the cetane number of the diesel or substitute. The tester adopts American standard methods (ASTM D6890-3 and IP 498/03). The following table shows the cetane number of the diesel after being added with different lycopenes.

A preparation method of the auxiliary concentrate is as follows: 133 g of 2-ethylhexyl nitrate, 33 g of dimethylbenzene and 0.2 g of ethoxy quinoline.

1000 times of concentrated antioxidant liquid are firstly prepared in the auxiliary concentrate, and then 0.2 g of concentrated antioxidant liquid is added in 200g of diesel in sequence to prepare various formulas as shown in the table, wherein β-carotene is purchased from Sigma-Aldrich, and the IBR + AAC®, the IBR + CLC® and the IBR + CLCR® are purchased from IBR Ltd. The IBR+AAC® contains 0.35 mg/ml of the phytoene and the phytofluene from Dunaliella salina as well as few amount of β-carotene. The ,IBR + CLC® contains 0.023 mg/ml of the phytoene and the phytofluene from Dunaliella salina, IBR + CLCR ® concentrate contains 1 mg/ml of the phytoene and the phytofluene from the Dunaliella salina, and IBR+TCLC® contains 0.74 mg/ml of phytoene and the phytofluene from tomato.

It can be seen from the table that the combination of the phytoene and the phytofluene from the Dunaliella salina has the function of improving the cetane number of the diesel, and is more effective than the combination of the phytoene and the phytofluene from tomato. The effect of the retinol for improving the cetane number of the diesel is equivalent to the β-carotene basically, but is poorer than that of the lycopene from the Dunaliella salina and better than that of the lycopene from the tomatoes.

| Sample | Cetane number (DCN) |
|---|---|
| Diesel | 47.1 |
| 200g diesel + 0.2g auxiliary concentrate | 51.21 |
| 200g diesel + 0.2g auxiliary concentrate + 0.21 mg β-carotene | 51.41 |
| 200g diesel + 0.2g auxiliary concentrate + 6ml IBR + AAC® | 52.23 |
| 200g diesel + 0.2g auxiliary concentrate + 9ml IBR + CLC® | 52.66 |
| 200g diesel + 0.2g auxiliary concentrate + 0.21 ml IBR + CLCR® concentrate | 51.55 |
| 200g diesel + 0.2g auxiliary concentrate + 0.28 ml IBR + TCLC® | 51.29 |
| 200g diesel + 0.2g auxiliary concentrate+ 0.21 mg retinol | 51.56 |

### Embodiment 5

The hydrocarbon fuel antioxidant provided by the present invention comprises a compound having a molecular structure of Rl-(CnHm)-R2, wherein N and M are positive integers. (CnHm) group is a straight chain molecule segment formed by covalent linkage of carbon atoms which are more than or equal to 3 and less than or equal to 50. R1 and R2 comprise an a aromatic ring or carboxylic acid or hydroxyl radical or alkyl group. The aromatic ring group may either be a single ring or polycyclic, and may also be a heterocycle containing oxygen or nitrogen, which may be provided with or not provided with a substituent group; the antioxidant contains more than one linear chain or ring conjugated bond formed by conjugated double bonds. The ring conjugated double bonds are located on the aromatic ring at the end part. The linear chain conjugated double bonds are located on a carbon chain in the middle; and the antioxidant has a prominent absorption peak in a 250-400 nm ultraviolet wavelength range. Further, in the (CnHm) group of the hydrocarbon fuel antioxidant, the homopolar bond connected to the carbon atoms comprises saturated bond, unsaturated bonds or mixture of the saturated bonds and the unsaturated bonds. Except C-C or C=C bonds, free electrons surrounding the carbon atoms are saturated by hydrogen atoms; partial hydrogen atoms may be substituted by methyl, hydroxyl radical or carbonyl groups.

For example, the antioxidant comprises phytoene, phytofluene, retinol, retinyl palmitate, retinyl stearate as well as α-, β-,γ-tocopherol.

The hydrocarbon fuel antioxidant may be added into the hydrocarbon fuel in a concentration of 0.250 mg (antioxidant)/kg (hydrocarbon fuel), wherein a more preferable concentration range is 0.8-10 mg/kg, and the most preferable range is 1-5 mg/kg.

### Embodiment 6

Further, the hydrocarbon fuel antioxidant may either be singly used (as described in embodiment 5) or be mixedly used in any combination manner and ratio. However, a mixture formed by compounds having different ultra violet absorption peaks, such as a mixture formed by components selected from phytoene and vitamin E (having absorption peak near 290 nm) and components selected from phytofluene and vitamin E, is preferred. For example, a mixture formed by a component (having absorption peak near 290 nm) selected from phytoene and vitamin A (having absorption peak near 325 nm) is preferred. For example, the mixing ratio of the mixture formed by phytofluene and phytoene is 10:1 to 1:10.

For example, various components of the following ratios may be adopted.

| Component | Ratio |
|---|---|
| Phytoene + α-tocopherol | 10:1 |
| Phytofluene + retinol | 1:10 |
| Phytofluene + phytoene | 3:6 |

### Embodiment 7

The antioxidant according to the present invention may together used with other any antioxidant or heat stabilizer. The antioxidants that can be used together comprise, but are not limited to phenol antioxidants, amine antioxidants, aromatic compound antioxidants or various antioxidants derived from biosome but not having apparent ultraviolet absorption effect.

For example, the antioxidant may be together used with other antioxidant or heat stabilizer in the following ratio.

| Component | Ratio |
|---|---|
| Phytoene + 2,6-di-tert-butylphenol | 10:1 |
| Retinol + n,n'-di-lower-alkyl phenylenediamines | 1:10 |
| β-tocopherol + quinoline | 1: 2 |
| Phytofluene + glutathione | 2: 1 |

### Embodiment 8

The antioxidant according to the present invention may (not required) also be used with various other combustion improvers such as cetane number improver and smoke point improver. The combustion improvers that can be used together comprise 2-ethylhexyl nitrate (which is also called as isooctyl nitrate). The mixing ratio of the antioxidant and the combustion improver is not defined specifically, and the antioxidant and the combustion improver are added with reference to the optimal volume of addition thereof respectively.

### Embodiment 9

The hydrocarbon fuel antidetonant according to the present invention may be selectively added with other hydrocarbon fuel additives such as detergent, depinker, pour point depressant, antirust agent, bactericide, conductivity additive and the like. The use of the antidetonant may not affect the use functions of the additives. On the contrary, the addition of the antidetonant may increase the stability of the additives. The mixing ratio is not defined specially and is depended on the optimal amount of addition respectively.

## Claims

1. A hydrocarbon fuel antioxidant, **characterized in that** the hydrocarbon fuel antioxidant comprises: a compound having a molecular structure of cRl-(CnHm)-R2, a precursor or a derivative of the compound; n and m are positive integers; -(CnHm)- group is a straight chain molecule segment formed by covalent linkage of carbon atoms which are more than or equal to 3 and less than or equal to 50; R1 and R2 comprise an aromatic ring or carboxylic acid or hydroxyl radical or alkyl group; the aromatic ring group may either be a single ring or polycyclic, and may also be a heterocycle containing oxygen or nitrogen, which may be provided with or not provided with a substituent group; the antioxidant contains more than one linear chain or ring conjugated bond formed by conjugated double bonds; the ring conjugated double bonds are located on the aromatic ring at the end part; the linear chain conjugated double bonds are located on a carbon chain in the middle; and the antioxidant has a prominent absorption peak in a 250-400 nm ultraviolet wavelength range.

2. The hydrocarbon fuel antioxidant according to Claim 1, **characterized in that**: in the (CnHm) group of the hydrocarbon fuel antioxidant, the homopolar bond connected to the carbon atoms comprises saturated bond, unsaturated bonds or mixture of the saturated bonds and the unsaturated bonds; except C-C or C=C bonds, free electrons surrounding the carbon atoms are saturated by hydrogen atoms; partial hydrogen atoms may be substituted by methyl, hydroxyl radical or carbonyl groups.

3. The hydrocarbon fuel antioxidant according to Claim 1 or 2, **characterized in that**: the hydrocarbon fuel antioxidant comprises carotinoid, vitamin A or vitamin E.

4. The hydrocarbon fuel antioxidant according to Claim 3, **characterized in that** the carotinoid comprises phytoene or phytofluene; the vitamin A comprises retinol, retinyl palmitate or retinyl stearate; and the vitamin E comprises α-tocopherol, β-tocopherol or γ-tocopherol.

5. Applications of the hydrocarbon fuel antioxidant according to anyone of Claims 1 to 4 as a hydrocarbon fuel additive.

6. The applications according to Claim 5, **characterized in that**: the hydrocarbon fuel antioxidant is added into the hydrocarbon fuel in a concentration of 0.2-50 mg (antioxidant)/kg (hydrocarbon fuel).

7. The applications according to Claim 6, **characterized in that**: the hydrocarbon fuel antioxidant is added into the hydrocarbon fuel in a concentration of 0.8-10 mg/kg.

8. The applications according to Claim 7, **characterized in that**: the hydrocarbon fuel antioxidant is added into the hydrocarbon fuel in a concentration of 1-5 mg/kg.

9. The applications according to Claim 5, **characterized in that** the hydrocarbon fuel antioxidant is singly added into the hydrocarbon fuel.

10. The applications according to Claim 5, **characterized in that** the hydrocarbon fuel antioxidant is mixedly added into the hydrocarbon fuel.

11. The applications according to Claim 10, **characterized in that** the hydrocarbon fuel antioxidant is a mixture of a compound having different ultraviolet absorption peaks.

12. The applications according to Claim 11, **characterized in that** n the hydrocarbon fuel antioxidant is a mixture of a compound having two different ultraviolet absorption peaks.

13. The applications according to Claim 12, **characterized in that** the mixing ratio of the hydrocarbon fuel antioxidant is 10:1 to 1:10.10.

14. The method of application of the hydrocarbon fuel antioxidant according to anyone of Claims 1 to 4, **characterized in that**: the antioxidant is together used with other antioxidant or heat stabilizer.

15. The method of application of the hydrocarbon fuel antioxidant according to Claim 14, **characterized in that**: the antioxidant comprises phenol antioxidant, amine antioxidant, aromatic compound antioxidant or antioxidant derived from biosome but not having apparent ultraviolet absorption effects.

16. The method of application of the hydrocarbon fuel antioxidant according to Claim 15, **characterized in that**: the phenol antioxidant comprises hindered phenol, 4-methyl-2,6-di-tert-butylphenol, 2,4-dimethyl-6-tert-butylphenol, and methylene bridged polyalkylphenols or diphenol.

17. The method of application of the hydrocarbon fuel antioxidant according to Claim 15, **characterized in that**: the amine antioxidant comprises n,n-diphenylphenylenediamine, p-octyldiphenylamine, p,p-dioctyldiphenylamine, n-phenyl-1-naphthylamine, n-phenyl-2-naphthylamine, n-(p-dodecyl) phenyl-2-naphthylamine, di-1-naphthylamine, di-2-naphthylamine, iminodibenzyl, cycloalkyl-di-lower alkyl amines, phenylenediamines, n,n'-di-lower-alkyl phenylenediamines, or n,n'-di-sec-butyl-p-phenylenediamine.

18. The method of application of the hydrocarbon fuel antioxidant according to Claim 15, **characterized in that**: the aromatic compound antioxidant comprises phenothiazine, quinolines, methylene segment formed by methylenes or polymethylenes, methylene or polymethylene segment substituted by hydroxyl radical or ketone group, or oxygen atom bridged double aromatic ring compound.

19. The method of application of the hydrocarbon fuel antioxidant according to Claim 15, **characterized in that**: the antioxidant derived from biosome but not having apparent ultraviolet absorption effect comprises fat-soluble carotinoids, β-carotene, retinol, tocopherol, ubiquinol, chlorophyll, organic sulphur compounds, water-soluble ascorbic acid, glutathione, lipoid acid, uric acid or oligomeric proanthocyanidins.

20. The method of application of the hydrocarbon fuel antioxidant according to Claim 15, **characterized in that**: the appending ratio of the hydrocarbon fuel antioxidant to the phenol antioxidant, the amine antioxidant, the aromatic compound antioxidant or the antioxidant derived from the biosome but not having apparent ultraviolet absorption effect is 1:10 to 10:1.

21. The method of application of the hydrocarbon fuel antioxidant according to Claim 20, **characterized in that**: the appending ratio of the hydrocarbon fuel antioxidant to the phenol antioxidant, the amine antioxidant, the aromatic compound antioxidant or the antioxidant derived from the biosome but not having apparent ultraviolet absorption effect is 2:1 to 1:2

22. The method of application of the hydrocarbon fuel antioxidant according to anyone of Claims 1 to 4, **characterized in that**: the hydrocarbon fuel antioxidant is together used with a combustion improver or a smoke point improver.

23. The method of application of the hydrocarbon fuel antioxidant according to Claim 22, **characterized in that**: the combustion improver comprises 2-ethylhexyl nitrate.

24. The method of application of the hydrocarbon fuel antioxidant according to anyone of Claims 1 to 4, **characterized in that**: the hydrocarbon fuel antioxidant can be selectively added with one or a mixture of several of detergent, antidetonant, pour point depressant, antirust agent, bactericide or conductivity additive.
